# EUROPEAN PATENT SPECIFICATION

(11) **EP 3 303 049 B1**
(45) Date of publication and mention of the grant of the patent: **21.12.2022**
(21) Application number: 16739255.4
(22) Date of filing: 03.06.2016
(51) Int. Cl.: B60N 2/01, B60K 1/00, B60K 17/16, B60K 17/354, B60L 50/60

(54) **ELECTRIC TRACTION CAR, USABLE IN PARTICULAR AS TAXI**
ELEKTROTRIEBWAGEN, INSBESONDERE VERWENDBAR ALS TAXI
VOITURE À TRACTION ÉLECTRIQUE POUVANT EN PARTICULIER ÊTRE UTILISÉE COMME TAXI

(30) Priority: 03.06.2015 IT UB20151312
(43) Date of publication of application: 11.04.2018
(73) Proprietor: Interactive Fully Electrical Vehicles S.r.l., 12048 Sommariva del Bosco (CN) (IT)
(72) Inventor: PERLO, Pietro, I-10098 Rivoli (TO) (IT); GUERRIERI, Pietro, I-10098 Rivoli (TO) (IT)
(74) Representative: Metroconsult Srl
(86) International application number: PCT/IB2016/053262
(87) International publication number: WO 2016/193937

(56) References cited:
- WO-A1-2009/017533
- WO-A1-2013/106049
- BE-A- 519 159
- CN-A- 101 875 320
- CN-A- 102 745 226
- CN-Y- 201 371 867
- DE-C- 163 014
- DE-U1-202004 004 262
- FR-A- 1 225 795
- FR-A1- 3 013 024
- US-A- 1 611 248
- US-A- 3 652 124
- US-A1- 2010 230 192
- US-A1- 2010 314 191
- US-B1- 6 390 537

## Description

The present invention relates to the field of electric traction cars, with particular reference to the "city car" (or "kei car", a new term introduced in Japan) category, with a length of 2.40 m and a width of 1.48 m. The invention is nevertheless applicable, in general, to cars of any size. Document CN101875320A discloses a car of a similar type.

The invention aims at creating an electric car of the above-mentioned type, which, despite its very compact dimensions, allows both the driver and the passengers to gain access to their seats with extreme ease. A further aim of the invention is to provide sufficient room, even in a very compact car, for up to three passengers in the rear seats, so that the car can also be used, for example, as a taxi.

These objects are achieved by the invention through a car of the above-mentioned type, which comprises a single front door on one side of the car and a single rear door on the opposite side of the car and which is further defined in claim 1. In this description and in the appended claims, the term "front door" refers to a door that can be used for gaining access to one or more front seats, and the term "rear door" refers to a door that can be used for gaining access to one or more rear seats of the car.

The car according to the invention comprises two intermediate uprights (the so-called B-uprights), arranged on the two sides of the car. The intermediate upright on the rear door side is longitudinally more advanced than the intermediate upright on the front door side, so that large door openings can be obtained.

Due to these characteristics, each side door can extend in the longitudinal direction of the vehicle for a length that is significantly greater than that which would be allowed if the front door and the rear door were on the same side of the car. It will thus be possible to comfortably gain access to the driver seat and rear seats of the car.

According to a further feature of the invention, the car comprises a single front seat in a central position with respect to the transverse direction of the vehicle, and three rear seats, including two outer rear seats, facing in the direction of travel, which are spaced apart in the transverse direction and have their median vertical planes divergent in the direction of travel, and a central rear seat, facing in the direction opposite to the direction of travel and having a backrest adjacent to the backrest of the central front seat, in such a way that when all three rear seats are occupied, the legs of the occupant of the central rear seat are interposed between the legs of the occupants of the outer rear seats.

Thanks to these features, the car can also be used as a taxi, since it provides the necessary room and ease of access for three passengers sitting in the rear seats, in spite of the extremely compact outer dimensions of the vehicle.

According to yet another preferred feature, the car roof is surmounted by a rigid cover that defines, together with the roof, a luggage compartment accessible at least through an opening on one side of the car. As an alternative, the car roof may be equipped with a conventional luggage rack.

The above-described advantageous configuration of the passenger compartment of the car according to the invention can be adopted because the car frame and the associated mechanical parts are so designed and arranged to create a roomy passenger compartment in the transverse direction of the vehicle, compared to the outer dimension thereof, in particular where the two outer rear seats are located. Such seats can be kept spaced apart by a relatively great length due to the chosen arrangement of the spring-shock absorber units of the rear suspension of the car, which clears the space that will be occupied by said outer rear seats. With reference to this aspect, the car according to the invention is preferably characterized by a configuration that has already been proposed in Italian patent applications TO2014A000035 (102014902225815), TO2014A000305 (102014902251745) and TO2014A000804 (102014902299415), all of which are still secret as of the filing date of the present application. As already illustrated in the above-mentioned patent applications, the car according to the invention comprises a main frame, a front axle unit and a rear axle unit. Said axle units comprise each an auxiliary supporting frame and two suspension units that connect two respective wheel supports to said auxiliary supporting frame. At least one of said axle units is a motorized axle with steering wheels, further comprising, mounted on the respective auxiliary supporting frame, an electric motor for actuating the rotation of the wheels, an electronic control unit of said motor, a transmission unit connecting the electric motor to the wheels, and a steering device for steering the wheel supports. The suspension units include an articulated quadrilateral linkage, with oscillating upper transverse arm and lower transverse arms, and comprise, for each wheel, a spring-shock absorber unit connected at its lower end to said lower arm and at its upper end to said auxiliary supporting frame or to the main frame. Each upper transverse arm of the rear axle unit is articulated to the auxiliary supporting frame in a rearwardly displaced position, with reference to the direction of travel of the vehicle, relative to the end of the upper control arm connected to the respective wheel support.

Thanks to these features, each spring-shock absorber unit of the rear axle unit can advantageously be positioned in a manner such as to not interfere with the areas occupied by the outer rear seats of the car. Such seats can thus be spaced apart in the transverse direction by a significant length, compared to the external transverse dimension of the car, and can also be positioned in a plane relatively close to the floor, thus leaving sufficient vertical room between the seat and the roof.

According to the present invention, the main frame includes a front frame sub-unit, a floor frame sub-unit, a rear frame sub-unit and an upper frame sub-unit. The auxiliary supporting frames of the front and rear axle units have fastening points bolted to matching fastening points of said front and rear frame sub-units. Each one of said frame sub-units comprises a lattice structure including hollow elements formed by steel sheets, preferably sheets of high-tensile steel. Said frame sub-units are arranged to be pre-assembled separately and then assembled together to form said main frame. Said rear frame sub-unit includes a plurality of cross-members defining a supporting planar surface for the outer rear seats of the car.

Preferably, said floor frame sub-unit defines one or more compartments for batteries supplying power to said electric motor. Thanks to the above-described features, it is possible to create a vehicle of the "kei car" category, i.e. having a length not exceeding 3.5 m and a width not exceeding 1.5 m, which is relatively roomy for both the driver and the passengers, despite the small outer dimensions of the car. There is much room available to the driver, due to the central arrangement of the single front seat. Also the room available for the three rear passengers is relatively large, thanks to the possibility of spacing apart the two outer rear seats.

Further features and advantages of the invention will become apparent from the following description and from the annexed drawings, which are supplied merely by way of nonlimiting example, wherein:
- Figure 1 is a perspective view of an embodiment of the car according to the invention, intended for use as a taxi,
- Figure 2 shows the car of Figure 1 with the luggage compartment door in the open position,
- Figure 3 shows a variant that features a different configuration of the luggage compartment, with openings on both sides of the car,
- Figure 4 illustrates a further variant with a luggage rack,
- Figure 5 is a schematic top view of the passenger compartment of the car according to the invention,
- Figure 6 is a schematic sectional side view of the passenger compartment of the car, which shows the arrangement of the driver and the passengers,
- Figure 7 is a perspective view of the two front and rear axle-suspension units in a preferred embodiment of the car according to the invention, and
- Figure 8 is an exploded perspective view of the main frame and of the auxiliary supporting frames of the axle-suspension units of the car according to the invention.

In the drawings that show different variants of the car according to the invention, the same reference numerals are used for designating equivalent parts.

With reference to the drawings, numeral 1 indicates as a whole an electric traction car belonging to the "city car" or "kei car" category, having a length of 2.4 m and a width of 1.48 m. In particular, the drawings show some examples of embodiment of the invention which are intended for use as a taxi. However, the invention is not limited to such a specific use nor to such specific dimensions.

The car 1 comprises front wheels RA and rear wheels RP, which in the preferred embodiment are all driven by two electric motors respectively associated with the front axle and rear axle of the vehicle.

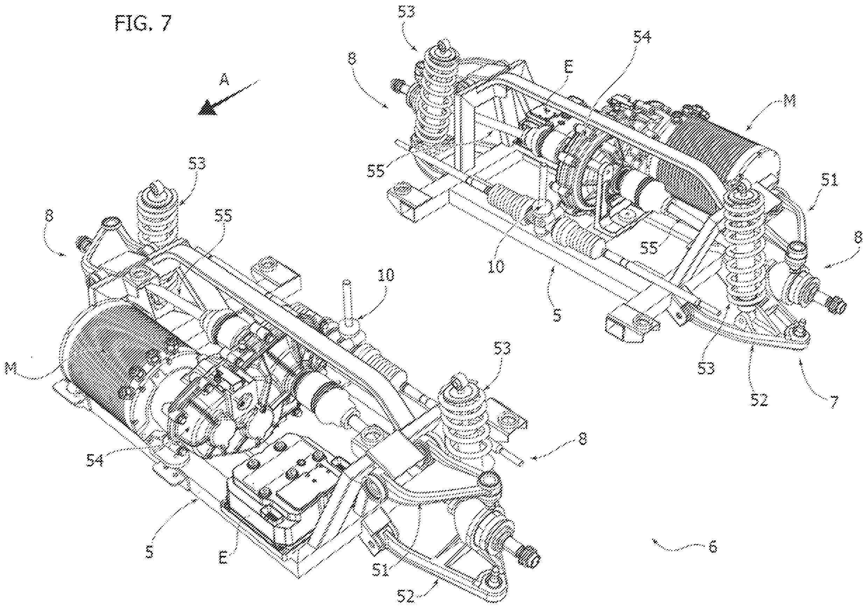

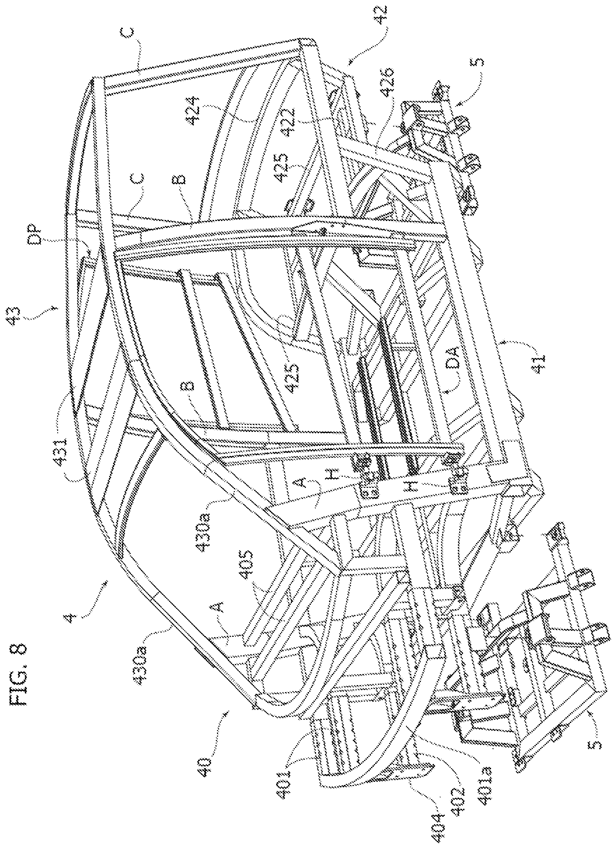

According to the invention, the front and rear axle units of the car have the structure and arrangement shown in Figure 7 of the annexed drawings. The axle units are designated by reference numerals 6 and 7 and comprise an auxiliary frame 5 whereon the mechanical parts of the suspension are pre-assembled, which in turn is mounted on the main frame of the car, shown in Figure 8. Each wheel is rotatably mounted on a wheel support (not shown in the drawings), which is pivotally mounted to the respective supporting frame 5 through a suspension unit 8 that includes an upper transverse arm 51 and a lower transverse arm 52. Each transverse arm has a triangular configuration, with one end articulated to the frame 5 through elastic supports and the opposite end pivotally connected to the wheel support. With each wheel also a shock absorber unit of the cylinder-coil spring type is associated, designated as a whole by reference numeral 53. Each axle unit further comprises an electric motor M carried by the respective frame 5, which actuates the rotation of the wheels through a transmission unit with a differential transmission unit 54 and two axle shafts 55. In the specific example shown in Figure 7, both of the front and rear axle units have steering wheels, and therefore include a steering device 10 for controlling the steering of the wheels. It must however be pointed out that the invention discussed herein is also applicable to a car wherein the electric motor M, the electronic control unit E associated therewith, the transmission unit 54 and the steering device 10 are only associated with either one of the two axle units, the other axle unit solely carrying the suspension comprising the transverse arms 51,52 and the spring-shock absorber units 53.

With reference to Figure 7, an important feature of the preferred embodiment is that each spring-shock absorber unit is connected to the lower arm 52 on both sides of each axle assembly. In the case of the rear axle unit, this allows locating the upper end of each spring-shock absorber unit 53 at a relatively low level, thus increasing the vertical space available in the passenger compartment of the vehicle.

A further advantageous feature of the preferred embodiment illustrated herein is that the upper arms 51 of the rear axle unit have such a configuration that the end of each arm which is connected to the respective frame 5 is longitudinally displaced relative to the outer end of the arm 51 which is connected to the respective wheel support. This result is attained by using an arm 51 having a considerably curved plan-view configuration. In the rear axle unit, the outer end of each arm 51 is longitudinally displaced forwards (with reference to the direction of travel of the car, indicated as A in Figure 7), whereas in the front axle unit the outer end of each arm 51 is longitudinally displaced backwards. Thanks to such a configuration, the spring-shock absorber unit 53 associated with each rear transverse arm 51 can be positioned in such a way as to clear the space in the passenger compartment where the outer rear seats of the car are located. As will be explained more in detail below, due to this configuration of the rear axle unit the outer rear seats of the car according to the invention can be positioned at a substantial distance from each other in the transverse direction, considering the small transverse dimension of the vehicle, thus significantly increasing the room available for the passengers in the transverse direction.

In the embodiment shown in Figure 7, the two front and rear axle units are identical (except for the fact that one is turned by 180° relative to the orientation of the other), thus simplifying the car production process and reducing the costs thereof.

With reference to Figure 8 of the annexed drawings, the frames 5 whereon the parts of the front and rear axle units are pre-assembled are in turn fastened by means of bolts under a main frame of the vehicle.

As illustrated in Figure 8, the main frame 4 consists of a front frame sub-unit 40, a floor frame sub-unit 41, a rear frame sub-unit 42 and a roof frame sub-unit 43.

Each one of the frame sub-units 40-43 comprises a lattice structure including hollow boxed elements made of steel, preferably high-tensile steel.

The structure of the front and rear frame sub-units includes longitudinal struts 401,402,422 adapted to absorb impact energy. Said frame sub-units are pre-assembled separately and then assembled together to form the main frame 4.

In the front sub-unit 40, the struts 401 are co-planar and have their front ends connected to a cross-member 401a. The front struts 402 are co-planar and are arranged lower than the struts 401. The front ends of the struts 402 carry plates 404 for connection to a cross-member or a bumper (not shown). In its upper part, the sub-unit 40 has cross-members 405 that connect the front uprights A.

The floor frame sub-unit 41 comprises two main side members having their front ends connected to the uprights A. The side members are connected to each other by means of cross-members. This sub-unit comprises also a lattice structure that defines a supporting planar surface for the driver seat, which is raised relative to the floor.

The rear sub-unit 42 comprises two inclined uprights 426 that extends upwards starting from the rear ends of the side members, which are joined to the structure that bears the cross-members 425 and a further upper cross-member 424.

The intermediate and rear side uprights (the so-called B-upright and C-upright) belong to the roof sub-unit 43. This sub-unit comprises two longitudinal beams which define, with their front portions, the uprights of the windscreen 430a. The longitudinal beams of the roof sub-unit 43 are connected together by cross-members 431. The uprights B and C have their upper ends connected to the longitudinal beams of the roof sub-unit 43.

As already mentioned, the B-upright on the left-hand side is in a rearwardly displaced position relative to the B-upright on the right-hand side, thus allowing the formation of a single, large front door opening on the left-hand side and a single, large rear door opening on the right-hand side (of course, it would also be possible to adopt a reversed configuration, with the front door on the right-hand side and the rear door on the left-hand side). Figure 8 also shows the door frames DA and DP and the hinges H for articulating the left front door DA to the upright A.

Preferably, the floor sub-unit 41 defines one or more housings for batteries supplying power to the electric motor(s) M.

The rear frame sub-unit 42 includes a plurality of cross-members 425 defining a supporting planar surface for the outer rear seats of the car. Due to the above-described configuration of the rear axle unit, the supporting planar surface defined by the cross-members 425 lies relatively low and extends transversally for a considerable length, considering the small outer dimension of the vehicle.

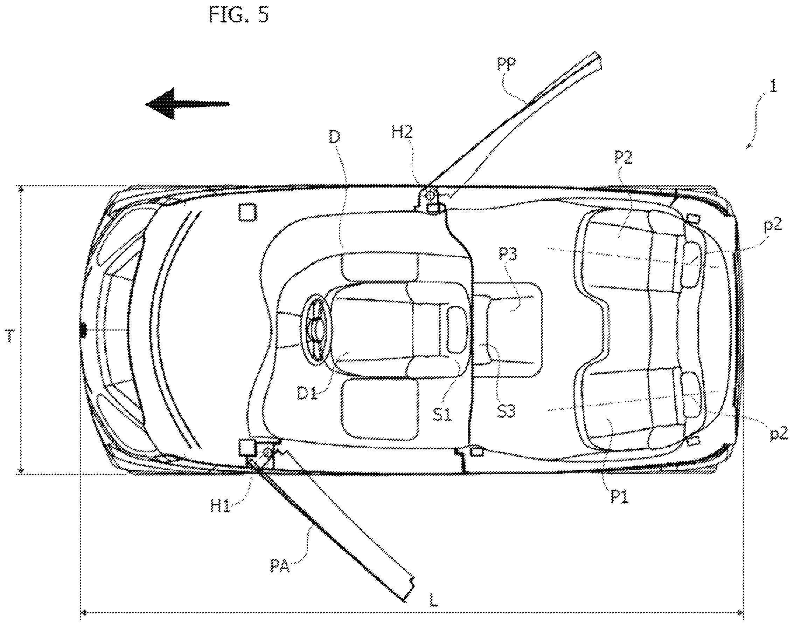

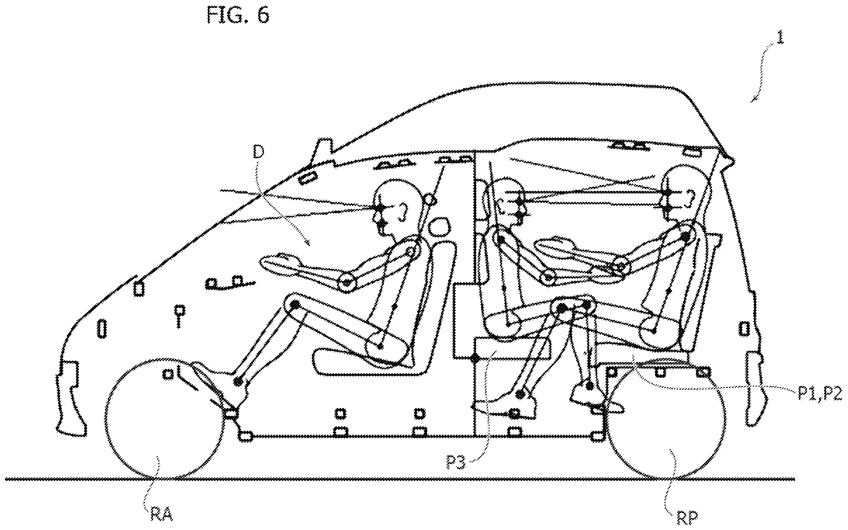

Referring now to Figures 5,6, the passenger compartment of the car according to the invention is preferably configured for having a single front seat unit D for the driver, positioned centrally relative to the transverse dimension of the vehicle. The central front driver seat unit D includes a seat D1 that lies on a frame portion that defines a planar supporting surface for the seat D1, which is raised relative to the floor of the vehicle. Preferably, said frame is shaped in accordance with the teachings of the previous Italian patent application TO2014A000312 (102014902252692) by the present Applicant, which is still secret as of the filing date of the present application. The raised structure on which the front driver seat lies defines underneath a space for the legs of the passengers occupying the outer rear seats of the car.

Still with reference to Figure 5, the car according to the invention preferably has three rear seats: two outer rear seats P1,P2, facing in the direction of travel, and one central rear seat P3, facing in the direction opposite to the direction of travel. The two outer rear seats P1,P2 have their median vertical planes p1,p2 divergent in the direction of travel, so as to reduce any possible interference between the legs of the passengers occupying the outer rear seats P1,P2 and the legs of the person occupying the central rear seat P3. The backrest S3 of the central rear seat P3 is adjacent to the backrest S1 of the front driver seat D1.

As clearly shown in Figure 5, the outer rear seats P1,P2 are spaced apart in the transverse direction of the car by a relatively great length, compared to the transverse dimension of the vehicle. In the specific example illustrated herein, said transverse dimension, referred to as T, is 1.48 m. Still in the specific example illustrated herein, the longitudinal dimension L of the car is 3.40 m. Despite such small dimensions, the car according to the invention provides a lot of room for the driver and the passengers. In particular, the outer rear seats P1,P2 are immediately adjacent to the two sidewalls of the car, mostly because of the configuration of the rear axle unit, shown in Figure 7. Of course, this will not prevent obtaining the necessary room in the vehicle with other configurations of the front and rear axle units.

The outer rear seats P1,P2 may consist of two separate seats, both of which lie on a supporting surface defined by a steel sheet (not shown) welded onto the cross-members 425 of the frame 4 (Figure 8), or they may be integrated into a single seat structure.

As can be seen in Figure 8, under the cross-members 425 that define the supporting surface for the outer rear seats P1,P2 some free space is left, between the plane of the car floor and the plane of the cross-members 425. This space is useful for receiving the legs of the passenger occupying the central rear seat P3.

Figure 6 of the annexed drawings shows how the above-described configuration of the passenger compartment of the car according to the invention can comfortably accommodate the driver and three passengers.

According to a fundamental feature of the present invention, access to the front driver seat and to the rear seats is made considerably easier in the car according to the invention, because there are a single front door on one side of the car and a single rear door on the opposite side of the car.

In the example shown in Figure 5, the front door, referred to as PA, is situated on the left-hand side of the car, whereas the single rear door, referred to as PP, is situated on the right-hand side. Both doors are hinged at the front to the frame of the vehicle, turning about respective hinge axes H1,H2.

Thanks to the above-described arrangement, both the front door PA and the rear door PP can have a dimension in the longitudinal direction of the car which is significantly longer than that which would be possible if both doors were located on the same side of the car. In other words, both the front door PA and the rear door PP have a relatively long dimension in the longitudinal direction, compared to the total longitudinal dimension L of the car, which allows providing easy access to the driver seat unit D and to the rear seats P1,P2,P3, in spite of the very short longitudinal dimension of the vehicle.

Of course, the main feature of the present invention is the arrangement of a single front door and a single rear door on opposite sides of the car, which can be adopted even with a passenger compartment configuration other than the one shown herein with reference to the preferred embodiment. Therefore, one should not exclude the adoption of passenger compartment configurations including, for example, only two rear seats, i.e. without the central rear seat P3, and/or with a front passenger seat next to the driver seat.

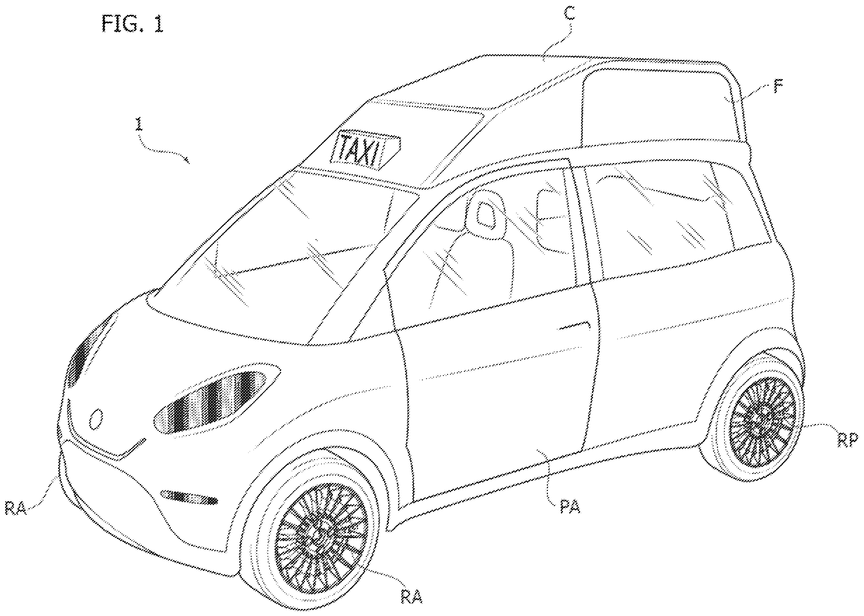

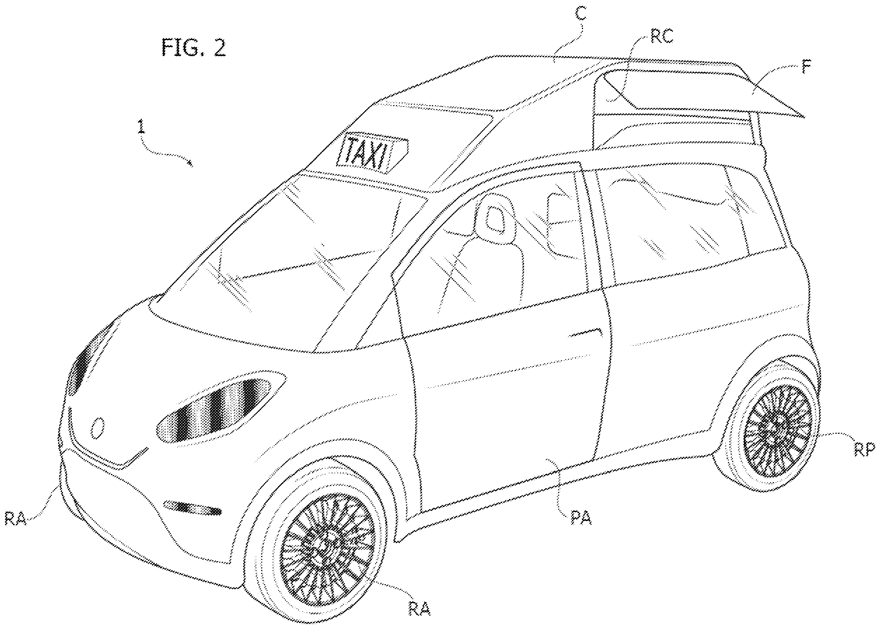

With reference to Figures 1,2, the embodiment shown therein refers to an electric car usable as a taxi, which comprises a rigid cover C on the roof, spaced apart from the latter to define a luggage compartment LC, which is open on at least one side of the car. In the example shown in Figures 1,2, the compartment LC is provided with one or more doors F.

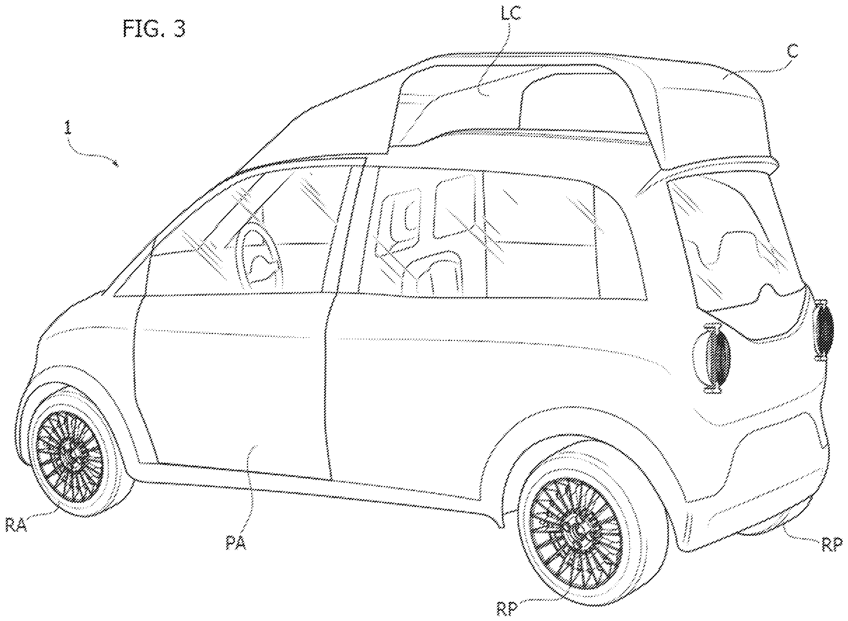

Figure 3 shows a variant wherein the luggage compartment LC is open on both sides of the car, with no closing doors.

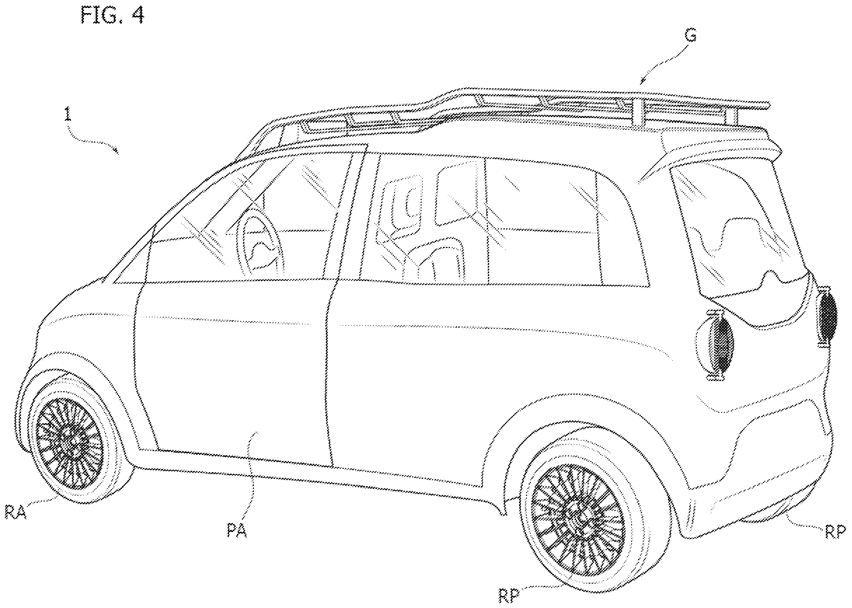

Figure 4 shows a variant wherein the roof of the car is equipped with a conventional luggage rack G.

As is apparent in the light of the above description, the car according to the invention is characterized in that, in the first place, the driver seat and the rear seats can be accessed with extreme ease, despite the very short longitudinal dimension of the vehicle. Moreover, there is a lot of room available for the passengers, compared to the outer dimensions of the car, mostly because of the arrangement of two outer rear seats transversally spaced apart by a considerable length, considering the transversal dimension of the vehicle. In the preferred embodiment, which can be used, for example, also as a taxi, the divergent arrangement of the two outer rear seats, combined with the presence of a central rear seat facing in the direction opposite to the direction of travel, allows accommodating three passengers, notwithstanding the very small dimensions of the vehicle, while offering to each one of them sufficient room for travelling comfortably. Room for the passengers' luggage is provided on top of the roof, preferably in a luggage compartment defined by a rigid roof cover having at least one access opening on one side of the car.

Of course, the forms of embodiment and the implementation details may be extensively varied from those described and illustrated herein by way of example.

For example, one or more of the rear seats may be of a type wherein the seat cushion can be moved into a substantially vertical inoperative position.

## Claims

1. A two-door electric traction car comprising a single front door (PA) on one side of the car, a single rear door (PP) on the opposite side of the car and a main frame (4) including:
- a front axle unit (6) and a rear axle unit (7) each comprising an auxiliary supporting frame (5);
- a front frame sub-unit (40), a floor frame sub-unit (41), a rear frame sub-unit (42) and a roof frame sub-unit (43),
said car being **characterized in that**
it comprises two lateral intermediate uprights (B) arranged on the two sides of the car which are longitudinally offset relative to each other, with the intermediate upright (B) on the side of the front door (PA) which intermediate upright (B) is rearwardly displaced in the longitudinal direction with respect to the intermediate upright (B) on the side of the rear door side (PP), said intermediate uprights (B) being parts of the roof frame sub-unit (43) of the main frame (4) of the car,
wherein the auxiliary supporting frames (5) of said front and rear axle units (6, 7) are bolted to said main frame (4),
wherein each one of said frame sub-units (40-43) comprises a lattice structure including hollow elements formed by steel sheets, preferably sheets of high-tensile steel, said frame sub-units (40-43) being arranged to be pre-assembled separately and then assembled together to form said main frame (4),
and wherein said rear frame sub-unit (42) includes a plurality of cross-members (425) defining a supporting planar surface for the outer rear seats (P1, P2) of the car.

2. Car according to claim 1, **characterized in that** it comprises a single front seat (D1) in a central position with respect to the transverse direction of the vehicle, and three rear seats (P1, P2, P3), including two outer rear seats (P1, P2), facing in the direction of travel, which are spaced apart in the transverse direction and have their median vertical planes (p1, p2) divergent in the direction of travel, and a central rear seat (P3), facing in the direction opposite to the direction of travel and having a backrest (S3) adjacent to the backrest (S1) of the central front seat (D1), in such a way that when all three rear seats (P1, P2, P3) are occupied, the legs of the occupant of the central rear seat (P3) are interposed between the legs of the occupants of the outer rear seats (P1, P2).

3. Car according to claim 1, **characterized in that** the vehicle roof is surmounted by a rigid cover (C) which defines, together with the roof, a luggage compartment (LC) accessible at least through an opening formed on one side of the car.

4. Car according to any one of the preceding claims, **characterized in that** said axle units (6, 7) each comprise two suspension units (8) connecting two respective wheel supports to said auxiliary supporting frame (5), and wherein at least one of said axle units (6, 7) is a motorized axle with steering wheels, further comprising, mounted on the respective auxiliary supporting frame (5), an electric motor (M) for actuating the rotation of the wheels, an electronic control unit (E) of said motor (M), a transmission unit (54) connecting the electric motor (M) to the wheels, and a steering device (10) for steering the wheel supports, wherein said suspension units include an articulated quadrilateral linkage, with an upper transverse arm (51) and a lower transverse arm (52) pivotally mounted to the respective auxiliary supporting frame (5) and pivotally connected to the respective wheel support, and a spring-shock absorber unit (53) which has a lower end connected to said lower transverse arm (52) and an upper end connected to said auxiliary supporting frame (5) or to the main frame of the vehicle, each axle unit having each upper transverse arm (51) which is articulated to the auxiliary supporting frame (5) in a position longitudinally displaced relative to the end of the upper transverse arm (51) that is connected to the respective wheel support.

5. Car according to any one of the preceding claims, **characterized in that** it has a length of 2.4 m and a width of 1.48 m.

## Patentansprüche

1. Zweitüriger elektrischer Triebwagen, umfassend eine einzelne Vordertür (PA) auf einer Seite des Wagens, eine einzelne Hintertür (PP) auf der gegenüberliegenden Seite des Wagens und einen Hauptrahmen (4), einschließlich:
- einer Vorderachseinheit (6) und einer Hinterachseinheit (7), die jeweils einen Hilfsstützrahmen (5) umfassen;
- einer Vorderrahmen-Untereinheit (40), einer Bodenrahmen-Untereinheit (41), einer Hinterrahmen-Untereinheit (42) und einer Dachrahmen-Untereinheit (43),
wobei der Wagen **dadurch gekennzeichnet ist, dass**
er zwei seitliche Zwischensteher (B) umfasst, die an den beiden Seiten des Wagens angeordnet sind, die in Längsrichtung zueinander versetzt sind, mit dem Zwischensteher (B) auf der Seite der Vordertür (PA), wobei der Zwischensteher (B) in Längsrichtung in Bezug auf den Zwischensteher (B) auf der Seite der Hintertürseite (PP) nach hinten versetzt ist, wobei die Zwischensteher (B) Teile der Dachrahmen-Untereinheit (43) des Hauptrahmens (4) des Wagens sind,
wobei die Hilfsstützrahmen (5) der Vorder- und Hinterachseinheiten (6, 7) mit dem Hauptrahmen (4) verschraubt sind,
wobei jede der Rahmen-Untereinheiten (40-43) eine Gitterstruktur umfasst, die aus Stahlplatten, vorzugsweise aus hochfestem Stahl, gebildete Hohlelemente einschließt, wobei die Rahmen-Untereinheiten (40-43) so eingerichtet sind, dass sie separat vormontiert und dann zusammenmontiert werden, um den Hauptrahmen (4) zu bilden,
und wobei die Hinterrahmen-Untereinheit (42) eine Vielzahl von Querträgern (425) einschließt, die eine stützende planare Oberfläche für die äußeren Rücksitze (P1, P2) des Wagens definieren.

2. Wagen nach Anspruch 1, **dadurch gekennzeichnet, dass** er einen einzelnen Vordersitz (D1) in einer zentralen Position in Bezug auf die Querrichtung des Fahrzeugs und drei Rücksitze (P1, P2, P3) umfasst, welche zwei äußere Rücksitze (P1, P2), die in Fahrtrichtung weisen, einschließen, die in der Querrichtung voneinander beabstandet sind und deren vertikale Medianebenen (p1, p2) in der Fahrtrichtung divergieren, und einen zentralen Rücksitz (P3), der in die der Fahrtrichtung entgegengesetzte Richtung weist und eine Rückenlehne (S3) aufweist, die an die Rückenlehne (S1) des zentralen Vordersitzes (D1) angrenzt, derart, dass, wenn alle drei Rücksitze (P1, P2, P3) besetzt sind, die Beine des Insassen des zentralen Rücksitzes (P3) zwischen den Beinen der Insassen der äußeren Rücksitze (P1, P2) angeordnet sind.

3. Wagen nach Anspruch 1, **dadurch gekennzeichnet, dass** das Fahrzeugdach von einer steifen Abdeckung (C) überlagert ist, die, zusammen mit dem Dach, einen Gepäckraum (LC) definiert, der zumindest durch eine an einer Seite des Wagens gebildete Öffnung zugänglich ist.

4. Wagen nach einem der vorstehenden Ansprüche, **dadurch gekennzeichnet, dass** die Achseinheiten (6, 7) jeweils zwei Aufhängungseinheiten (8) umfassen, die zwei jeweilige Radträger mit dem Hilfsstützrahmen (5) verbinden, und wobei mindestens eine der Achseinheiten (6, 7) eine motorisierte Achse mit Lenkrädern ist, weiter umfassend, an dem jeweiligen Hilfsstützrahmen (5) montiert, einen Elektromotor (M) zum Antreiben der Drehung der Räder, eine elektronische Steuereinheit (E) des Motors (M), eine Übertragungseinheit (54), die den Elektromotor (M) mit den Rädern verbindet, und eine Lenkvorrichtung (10) zum Lenken der Radträger, wobei die Aufhängungseinheiten ein angelenktes vierseitiges Gestänge umfassen, mit einem oberen Querlenker (51) und einem unteren Querlenker (52), schwenkbar montiert an dem jeweiligen Hilfsstützrahmen (5) und schwenkbar verbunden mit dem jeweiligen Radträger, und einer Feder-Dämpfer-Einheit (53), die ein unteres Ende aufweist, das mit dem unteren Querlenker (52) verbunden ist, und ein oberes Ende, das mit dem Hilfsstützrahmen (5) oder dem Hauptrahmen des Fahrzeugs verbunden ist, wobei jede Achseinheit jeden oberen Querlenker (51) aufweist, der an den Hilfsstützrahmen (5) in einer Position angelenkt ist, die in Bezug auf das Ende des oberen Querlenkers (51), das mit dem jeweiligen Radträger verbunden ist, in Längsrichtung verschoben ist.

5. Wagen nach einem der vorstehenden Ansprüche, **dadurch gekennzeichnet, dass** er eine Länge von 2,4 m und eine Breite von 1,48 m aufweist.

## Revendications

1. - Voiture de traction électrique à deux portes comprenant une seule porte avant (PA) sur un côté de la voiture, une seule porte arrière (PP) sur le côté opposé de la voiture, et un châssis principal (4) comprenant :
- une unité essieu avant (6) et une unité essieu arrière (7) comprenant chacune un châssis de support auxiliaire (5) ;
- une sous-unité châssis avant (40), une sous-unité châssis de plancher (41), une sous-unité châssis arrière (42) et une sous-unité châssis de toit (43),
ladite voiture étant **caractérisée par le fait qu'** elle comprend deux montants intermédiaires latéraux (B) disposés sur les deux côtés de la voiture, lesquels sont décalés longitudinalement l'un par rapport à l'autre, avec le montant intermédiaire (B) sur le côté de la porte avant (PA), lequel montant intermédiaire (B) est déplacé vers l'arrière dans la direction longitudinale par rapport au montant intermédiaire (B) sur le côté de la porte arrière (PP), lesdits montants intermédiaires (B) faisant parties de la sous-unité châssis de toit (43) du châssis principal (4) de la voiture,
les châssis de support auxiliaires (5) desdites unités essieu avant et essieu arrière (6, 7) étant boulonnés audit châssis principal (4),
chacune desdites sous-unités châssis (40-43) comprenant une structure en treillis incluant des éléments creux formés par des tôles d'acier, de préférence des tôles d'acier à haute résistance mécanique, lesdites sous-unités châssis (40-43) étant agencées pour être préassemblées séparément et ensuite assemblées ensemble pour former ledit châssis principal (4), et
ladite sous-unité châssis arrière (42) comprenant une pluralité de traverses (425) définissant une surface plane de support pour les sièges arrière externes (P1, P2) de la voiture.

2. - Voiture selon la revendication 1, **caractérisée par le fait qu'**elle comprend un seul siège avant (D1) dans une position centrale par rapport à la direction transversale du véhicule, et trois sièges arrière (P1, P2, P3), comprenant deux sièges arrière externes (P1, P2), orientés dans le sens de marche avant, qui sont espacés dans la direction transversale et ont leurs plans verticaux médians (p1, p2) qui divergent dans le sens de marche avant, et un siège arrière central (P3), orienté dans la direction opposée au sens de marche avant et ayant un dossier (S3) adjacent au dossier (S1) du siège avant central (D1), d'une manière telle que, lorsque les trois sièges arrière (P1, P2, P3) sont occupés, les jambes de l'occupant du siège arrière central (P3) sont interposées entre les jambes des occupants des sièges arrière externes (P1, P2) .

3. - Voiture selon la revendication 1, **caractérisée par le fait que** le toit de véhicule est surmonté d'une couverture rigide (C) qui définit, conjointement avec le toit, un compartiment à bagages (LC) accessible au moins à travers une ouverture formée sur un côté de la voiture.

4. - Voiture selon l'une quelconque des revendications précédentes, **caractérisée par le fait que** lesdites unités essieux (6, 7) comprennent chacune deux unités de suspension (8) reliant deux supports de roue respectifs audit châssis de support auxiliaire (5), et au moins une desdites unités essieux (6, 7) étant un essieu motorisé avec des roues directrices, comprenant en outre, montés sur le châssis de support auxiliaire respectif (5), un moteur électrique (M) pour actionner la rotation des roues, une unité de commande électronique (E) dudit moteur (M), une unité de transmission (54) reliant le moteur électrique (M) aux roues, et un dispositif de direction (10) pour diriger les supports de roue, lesdites unités de suspension comprennent un quadrilatère articulé, avec un bras transversal supérieur (51) et un bras transversal inférieur (52) montés de manière pivotante au châssis de support auxiliaire respectif (5) et reliés de manière pivotante au support de roue respectif, et une unité amortisseur à ressort (53) qui a une extrémité inférieure reliée audit bras transversal inférieur (52) et une extrémité supérieure reliée audit châssis de support auxiliaire (5) ou au châssis principal du véhicule, chaque unité essieu ayant chaque bras transversal supérieur (51) qui est articulé au châssis de support auxiliaire (5) dans une position déplacée longitudinalement par rapport à l'extrémité du bras transversal supérieur (51) qui est reliée au support de roue respectif.

5. - Voiture selon l'une quelconque des revendications précédentes, **caractérisée par le fait qu'**elle a une longueur de 2,4 m et une largeur de 1,48 m.
